(19) Europäisches Patentamt
European Patent Office
Office européen des brevets

(11) Veröffentlichungsnummer: **0 096 789**
**A1**

(12) # EUROPÄISCHE PATENTANMELDUNG

(21) Anmeldenummer: **83105321.0**

(22) Anmeldetag: **30.05.83**

(51) Int. Cl.³: **C 09 B 29/10**
// C09B29/01, D06P1/18

(30) Priorität: **07.06.82 DE 3221504**

(43) Veröffentlichungstag der Anmeldung: **28.12.83 Patentblatt 83/52**

(84) Benannte Vertragsstaaten: **CH DE FR GB IT LI**

(71) Anmelder: **CASSELLA Aktiengesellschaft, Hanauer Landstrasse 526, D-6000 Frankfurt am Main 61 (DE)**

(72) Erfinder: **Bühler, Ulrich, Dr., Kastanienweg 8, D-8755 Alzenau (DE)**
Erfinder: **Tappe, Horst, Dr., Ringstrasse 9, D-6057 Dietzenbach (DE)**
Erfinder: **Bode, Albert, Finkenweg 1, D-6231 Schwalbach (DE)**
Erfinder: **Hähnke, Manfred, Dr., Behringerstrasse 13, D-6233 Kelkheim (DE)**
Erfinder: **Roth, Kurt, Breckenheimerstrasse 35, D-6238 Hofheim (DE)**

(74) Vertreter: **Urbach, Hans-Georg, Dr. et al, Hanauer Landstrasse 526, D-6000 Frankfurt am Main 61 (DE)**

(54) **Wasserunlösliche Monoazofarbstoffe, ihre Herstellung und ihre Verwendung.**

(57) Azofarbstoffe der Formel (I)

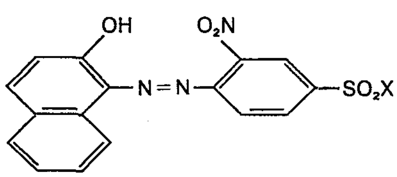

(I)

worin X die im Anspruch 1 genannte Bedeutung hat, ihre Herstellung durch Diazotierung von Aminen der Formel II

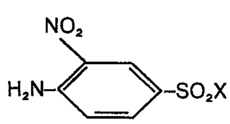

(II)

und Kupplung auf β-Naphthol, sowie ihre Verwendung zum Färben und Bedrucken von hydrophoben Fasermaterialien.

EP 0 096 789 A1

**Wasserunlösliche Monoazofarbstoffe, ihre Herstellung und ihre Verwendung**

Die vorliegende Erfindung betrifft Azofarbstoffe der Formel

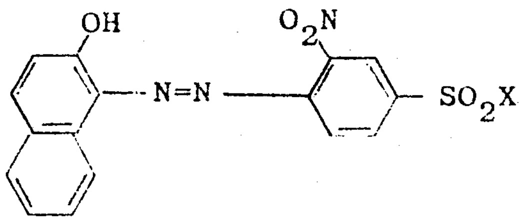

(I)

in der X für $NR^1R^2$, $OR^3$ oder $R^4$ steht, $R^1$ Wasserstoff, gegebenenfalls substituiertes Alkyl mit 1 bis 10 C-Atomen, Cycloalkyl mit 5 oder 6 C-Atomen, Alkenyl mit 3 bis 5 C-Atomen oder gegebenenfalls substituiertes Phenyl, oder ein Rest der Formel

$$-\left[AO\right]_m \cdot \left[A'O\right]_n \cdot R \qquad \text{ist,}$$

$R^2$ substituiertes Alkyl mit 1 bis 4 C-Atomen , gegebenenfalls substituiertes Alkyl mit 5 bis 10 C-Atomen oder Alkenyl mit 3 bis 5 C-Atomen oder ein Rest der Formel

$$\left[AO\right]_m \cdot \left[A'O\right]_n \cdot R \qquad \text{ist,}$$

wobei A und A' unabhängig voneinander lineare oder verzweigte zweiwertige, gesättigte Kohlenwasserstoffreste mit 2 bis 6 C-Atomen, R Wasserstoff, Alkyl mit 1 bis 4 C-Atomen, Cycloalkyl mit 5 oder 6 C-Atomen, Alkenyl mit 3 bis 5 C-Atomen, Phenyl, substituiertes Phenyl, Benzyl, Phenethyl, Alkylcarbonyl mit 1 bis 4 C-Atomen oder Benzoyl bedeuten und m die Werte 1 bis 5 und n die Werte 0 oder 1 annehmen kann, $R^3$ gegebenenfalls substituiertes Phenyl und $R^4$ substituiertes Alkyl mit 1 bis 4 C-Atomen gegebenenfalls substituiertes Alkyl mit 5 bis 10 C-Atomen, Cycloalkyl mit 5 oder 6 C-Atomen, Alkenyl mit 3 bis 5 C-Atomen oder gegebenenfalls substituiertes Phenyl bedeuten, ihre Herstellung durch Diazotierung von Aminen der Formel II

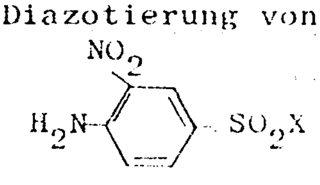

(II)

und Kupplung auf β-Naphthol, sowie ihre Verwendung zum Färben und Bedrucken von hydrophoben Fasermaterialien.

Farbstoffe auf Basis β-Naphthol mit 4-Amino-3-nitrobenzolsulfonamid-Diazokomponenten, die durch Alkylreste mit 1 bis 4 C-Atomen substituiert sind, sind aus der japanischen Patentanmeldung 53-38780 bekannt. Sie färben Polyester in orangen Tönen, zeigen jedoch noch Mängel im Hinblick auf verschiedene Gebrauchsechtheiten, insbesondere aber im Hinblick auf die Applikation.

Es wurde nun überraschenderweise gefunden, daß sich diese Mängel beheben lassen , wenn, wie es bei den erfindungsgemäßen Farbstoffen der Fall ist, die Alkylreste der Sulfonamid-Gruppen längerkettig, verzweigt, substituiert oder durch ein oder mehrere Sauerstoffatome unterbrochen werden bzw. die Sulfonamid-Gruppen durch eine Sulfonsäurearylester- oder Alkylsulfonyl- oder Arylsulfonylgruppe ersetzt werden.

Diese Überlegenheit ergibt sich beim Färben und Bedrucken aller technisch bedeutenden hydrophoben Fasermaterialien, insbesondere nach allen gängigen Färbe- und Druckverfahren.

Alkylreste, die für $R^1$ oder $R^4$ stehen, können linear oder verzweigt sein und sind beispielsweise Methyl, Ethyl, n-Propyl, i-Propyl, n-Butyl, i-Butyl. Für $R^1$ können ferner stehen n-Pentyl, 2-Methylbutyl, 2-Methylbutyl-2, 3-Methylbutyl, 3-Methylbutyl-2, n-Hexyl, 2-Methylpentyl-3, 2-Methylpentyl-4, 3-Methylpentyl-3, 4-Methylpentyl, 2-Ethylbutyl, 1.3-Dimethylbutyl, n-Heptyl, 3-Methylhexyl, 5-Methylhexyl,2-Methylhexyl-2, 2-Ethylhexyl, n-Octyl, 6-Methylheptyl-2, i-Nonyl, n-Decyl, i-Decyl.

Alkylreste, die für $R^2$ stehen, können linear oder verzweigt sein und sind beispielsweise n-Pentyl, 2-Methylbutyl, 2-Methylbutyl-2, 3-Methylbutyl, 3-Methylbutyl-2, n-Hexyl, 2-Methylpentyl-3, 2-Methylpentyl-4, 3-Methylpentyl-3, 4-Methylpentyl, 2-Ethylbutyl, 1.3-Dimethylbutyl,

n-Heptyl, 3-Methylhexyl, 5-Methylhexyl, 2-Methylhexyl-2, 2-Ethylhexyl, n-Octyl, 6-Methylheptyl-2, i-Nonyl, n-Decyl, i-Decyl, Alkenylreste, die für $R^1$, $R^2$ oder $R^4$ stehen können, sind beispielsweise Allyl, Methallyl oder Crotyl.

Cycloalkylreste, die für $R^1$, $R^2$ oder $R^4$ stehen können, sind Cyclopentyl und Cyclohexyl.

Stehen sowohl $R^1$ als auch $R^2$ für Reste der Formel $[AO]_m \cdot [A'O]_n \cdot R$ . so sind die Bedeutungen von A, A', n, m und R in den beiden Resten unabhängig voneinander, d.h. sie können gleich oder verschieden sein.

Reste der Formel

$$-[AO]_m \cdot [A'O]_n \cdot R$$

werden im folgenden als Polyäther-Reste bezeichnet. Sie weisen eine Polyätherkette auf, bestehend aus m Gliedern der Formel -AO- und n Gliedern der Formel -A'O-, wobei ein eventuell vorhandenes Kettenglied -A'O- an jeder beliebigen Stelle der Kette stehen kann. Auch diese Anordnung der Kettenglieder kann bei den für $R^1$ und $R^2$ stehenden Polyätherresten unterschiedlich sein.

Lineare oder verzweigte zweiwertige, gesättigte Kohlenwasserstoffreste, die für A oder A' stehen können, sind beispielsweise der Ethylen-, Propylen-1,2-, Propylen-1,3-, Propylen-2,3-, Butylen-1,2-, Butylen-1,3-, Butylen-1,4-, Butylen-2,3-, Butylen-2,4-, Butylen-3,4-, 2,2-Dimethylpropylen-1,3-, 2-Ethylpropylen-1,3- oder der Hexylen-1,6-Rest.
Alkylreste mit 1 bis 4 C-Atomen, die für R stehen können, sind Methyl, Ethyl, n-Propyl, i-Propyl, n-Butyl, sek.-Butyl, i-Butyl und tert.-Butyl.
Cycloalkylreste mit 5 oder 6 C-Atomen, die für R stehen können, sind Cyclopentyl und Cyclohexyl.
Alkenylreste mit 3 bis 5 C-Atomen, die für R stehen können, sind Allyl, Methally, Crotyl. Gegebenenfalls substituierte Phenyl-Reste, die für R stehen können, sind o-, m- oder p-Methylphenyl, -Chlorphenyl, -Methoxy- und -Ethoxyphenyl. Alkylcarbonylreste mit 1 bis 4 C-Atomen, die für R stehen können, sind Formyl, Acetyl, Propionyl, n-Butyryl und i-Butyryl.

Bevorzugt sind für A Kohlenwasserstoffreste mit 2 oder 3 C-Atomen und für A' Kohlenwasserstoffreste mit 1 bis 4 C-Atomen.

Substituenten an den Alkylresten, die für $R^1$, $R^2$ und $R^4$ stehen können, sind z.B. Chlor, Brom, Cyan, Alkoxycarbonyl mit 2 bis 5 C-Atomen oder Phenyl.

Die Alkylreste, die für $R^4$ stehen, können darüber hinaus durch Alkoxy mit 1 bis 4 C-Atomen, Cycloalkoxy mit 5 oder 6 C-Atomen, Alkenoxy mit 3 bis 5 C-Atomen, Phenoxy, Hydroxy oder Alkylcarbonyloxy mit 2 bis 5 C-Atomen substituiert sein.

Substituenten an gegebenenfalls substituiertem Phenyl, das für $R^1$, $R^3$ oder $R^4$ stehen kann, sind z.B. Alkyl mit 1 bis 4 C-Atomen, Alkoxy mit 1 bis 4 C-Atomen, Chlor oder Brom.

Bevorzugte Reste $R^1$ sind Wasserstoff, Alkyl mit 1 bis 8 C-Atomen, Alkenyl mit 3 bis 5 C-Atomen und $(CH_2)_aO[(CH_2)_bO]_nR$, wobei a = 2 oder 3, b = 1; 2; 3 oder 4, n = O oder 1,
R = Wasserstoff, Alkyl mit 1 bis 8 C-Atomen oder Alkylcarbonyl mit 2 bis 4 C-Atomen oder Phenyl ist.

Bevorzugte Reste $R^2$ in für X stehenden Resten $NR^1R^2$ sind Alkyl mit 6 oder 7 C-Atomen, Alkenyl mit 3 bis 5 C-Atomen und $(CH_2)_aO[(CH_2)_bO]_nR$, wobei a = 2 oder 3, b = 1; 2; 3 oder 4, n = O oder 1, R Wasserstoff, Alkyl mit 1 bis 8 C-Atomen oder Alkylcarbonyl mit 2 bis 4 C-Atomen oder Phenyl ist.

Von den erfindungsgemäßen Farbstoffen, in denen X für eine $-NR^1R^2$-Gruppe steht, sind diejenigen bevorzugt, bei

denen $R^1$ Wasserstoff und $R^2$ ein unsubstituierter Alkylrest mit 5 bis 10 C-Atomen oder ein substituierter Alkylrest mit 2 bis 4 C-Atomen oder einer der genannten Polyätherreste ist und solche, bei denen $R^1$ unsubstituiertes Alkyl mit 1 bis 10 C-Atomen und $R^2$ unsubstituiertes Alkyl mit 5 bis 10 C-Atomen ist, wobei die Summe der Kohlenstoffatome in $R^1$ und $R^2$ größer ist als 7 oder bei denen $R^1$ und $R^2$ substituierte Alkylgruppen mit 2 oder 3 C-Atomen, insbesondere β- oder γ-Hydroxypropyl oder ß-Hydroxyethyl sind oder in denen $R^1$ und $R^2$ Polyäthergruppen sind.

Bevorzugte Kombinationen $R^1/R^2$ sind Kombinationen bevorzugter Reste $R^1$ und $R^2$ wie z.B. Wasserstoff/Alkyl $C_6$-$C_7$,
Wasserstoff/Alkenyl $C_3$-$C_5$,
Wasserstoff/$-(CH_2)_a-O-[(CH_2)_bO]_n-R$,
$-(CH_2)_a-O-[(CH_2)_bO]_n-R$ / $-(CH_2)_aO-[(CH_2)_bO]_n-R$
" /Alkyl $C_1$-$C_6$
" /Alkenyl $C_3$-$C_5$
Alkyl $C_5$-$C_7$/Alkyl $C_5$-$C_7$ ,
Alkenyl $C_3$-$C_5$/Alkenyl $C_3$-$C_5$ ,
wobei in den Resten
$(CH_2)_aO[(CH_2)_bO]_n-R$ a = 2 oder 3, b = 1; 2; 3 oder 4, n = 0 oder 1, R = Wasserstoff, Alkyl mit 1 bis 8 C-Atomen oder Alkylcarbonyl mit 2 bis 4 C-Atomen sein kann.

Besonders bevorzugte Kombinationen $R^1/R^2$ sind z.B. die Kombination $-(CH_2)_3OR$/Wasserstoff, wobei R $C_{3-8}$Alkyl oder Alkylcarbonyl mit 2 bis 4 C-Atomen sein kann, die Kombination $-(CH_2)_3OR$/Alkyl $C_1$-$C_8$ oder die Kombination $-(CH_2)_2OR$/Alkyl $C_1$-$C_8$, wobei R Wasserstoff, Alkyl $C_1$-$C_8$ oder Alkylcarbonyl mit 2-4 C-Atomen sein kann.

Bevorzugte Farbstoffe der Formel I, in der X für $NR^1R^2$ steht, sind solche mit bevorzugten Kombinationen $R^1/R^2$, besonders bevorzugte Farbstoffe sind solche mit besonders bevorzugten Kombinationen $R^1/R^2$.

Bevorzugte Reste $R^3$ in für X stehenden Resten $OR^3$ sind mit bis zu drei Alkylgruppen mit insgesamt bis zu 8 C-Atomen substituierte Phenylreste.

Bevorzugte Reste $R^4$ sind Reste der Formel $-(CH_2)_2OR$, in der R für Alkyl $C_1$-$C_8$ oder Alkylcarbonyl $C_2$-$C_4$ steht.

Die Herstellung der erfindungsgemäßen Farbstoffe der Formel I erfolgt, indem man ein Amin der allgemeinen Formel II diazotiert und auf β-Naphthol kuppelt. Die Diazotierung des Amins der Formel II geschieht in an sich bekannter Weise durch Einwirkung von salpetriger Säure oder salpetrige Säure abspaltende Verbindungen. Beispielsweise können die Amine in Schwefelsäure, Salzsäure oder in niederen aliphatischen Carbonsäuren, die gegebenenfalls mit Wasser verdünnt werden können, wie z.B. Ameisensäure, Essigsäure oder Propionsäure, suspendiert oder gelöst und bei $0^o$ bis $50^oC$ durch Zusatz von Nitrosylschwefelsäure oder Natriumnitrit diazotiert werden.

Die Kupplung wird üblicherweise in Wasser unter Zusatz einer Base durchgeführt, die für eine ausreichende Konzentration an Naphtholat-Anionen sorgt. Basen, die hierfür bekannterweise eingesetzt werden, sind z.B. Alkalihydroxyde oder Alkalisalze schwacher Säuren, wie z.B. Natrium- oder Kaliumhydroxyd, Soda, Pottasche oder auch Natriumhydrogencarbonat. Darüberhinaus werden zweckmäßigerweise Puffersubstanzen zugesetzt, die den Säureüberschuß der Diazoniumlösung und die bei der Kupplung frei werdende Säure abfangen. Solche Puffer sind bekanntlich ebenfalls vorzugsweise Alkalisalze schwacher Säuren, wie z.B. Natriumacetat oder Natriumhydrogenphosphat.

Die Kupplung kann auch in einer niederen aliphatischen Carbonsäure, wie z.B. Essigsäure, die zweckmäßigerweise mit Wasser verdünnt ist, bzw. in einer Mischung aus Wasser und einem in Wasser wenig löslichen Alkohol, wie n- oder i-Butanol, stattfinden. Zweckmäßigerweise wird auch dabei das System durch Basen, wie Natriumacetat oder Natriumhydrogenphosphat, gepuffert. Die Kupplungstemperatur liegt in der Regel zwischen $0^o$ und $30^oC$.

Die Amine der Formel II, in denen X für $-NR^1R^2$ steht, lassen sich durch Umsetzung von 4-Chlor-3-nitrobenzolsulfonamiden mit Ammoniak, wie es z.B. in Ber. Deut.Chem.Ges.

24, 3788 (1891) beschrieben ist, durch Umsetzung von 4-Acetamino-3-nitrobenzolsulfonylchlorid mit Aminen der Formel $HNR^1R^2$ und anschließendes Abseifen der Methylgruppe analog J. Chem. Soc. 1939, 609 oder aber durch Nitrieren von 4-Acetaminobenzolsulfonamiden und anschließendes Abseifen der Acetylgruppe herstellen.

Die Amine der Formel II, in der X für $OR^3$ steht, sind ebenfalls durch Aminierung der entsprechenden 4-Chlor-3-nitrobenzolsulfonsäureester, für deren Synthese in DRP 732 780 eine Arbeitsvorschrift angegeben ist, zugänglich.

Die Amine der Formel II, in der X für $R^4$ steht, lassen sich durch Nitrierung und anschließende Entacetylierung der entsprechenden 4-Acetaminophenylsulfone synthetisieren.

Die erfindungsgemäßen Farbstoffe eignen sich insbesondere zum Färben und Bedrucken von hydrophoben Fasermaterialien, wie beispielsweise Polyamid, Cellulose-2 1/2-acetat, Cellulosetriacetat und insbesondere Polyestermaterialien, wie z.B. Polyethylenglykoltherephthalat.

Sie liefern hierauf nach üblichen Färbe- und Druckverfahren farbstarke orange Färbungen und Drucke mit sehr guten Echtheitseigenschaften, insbesondere sehr guter Licht- und Thermofixierechtheit.

Das Färben der genannten Fasern, die einzeln oder im Gemisch mit anderen Faserarten, wie z.B. Baumwolle, regenerierten Zellulosefasern oder Wolle vorliegen können , mit den erfindungsgemäßen Farbstoffen erfolgt in an sich bekannter Weise zweckmäßig aus wäßriger Suspension in Gegenwart von Carriern zwischen etwa 80 bis 110° C, in Abwesenheit von Carriern zwischen etwa 110 bis 140°C, sowie nach dem sogenannten Thermofixierverfahren bei etwa 180 bis 230°C. Das Bedrucken der genannten Materialien kann so durchgeführt werden, daß die mit den neuen Farbstoffen bedruckte Ware in Gegenwart eines Carriers bei Temperaturen zwischen etwa 80 bis 110°C oder auch in Abwesenheit eines

Carriers bei etwa 110 bis 180°C gedämpft oder auch nach dem sogenannten Thermofixierverfahren bei etwa 180 bis 230°C behandelt wird.

Sofern Textilmaterialien gefärbt oder bedruckt werden sollen, die neben den genannten hydrophoben synthetischen Fasern noch natürliche Fasern, insbesondere die oben genannten enthalten, können die erfindungsgemäßen Farbstoffe auch mit anderen Farbstoffklassen, wie z.B. Küpen-, Direkt- oder Reaktivfarbstoffen, gemeinsam eingesetzt werden.

Es ist daher in diesen Fällen möglich, auch Mischungen der erfindungsgemäßen Farbstoffe mit den anderen Farbstoffklassen zu applizieren und die Farbstoffe dann in an sich bekannter Weise gleichzeitig oder nacheinander zu fixieren.

Die erfindungsgemäßen Farbstoffe eignen sich auch zum Färben der vorstehend aufgeführten hydrophoben Materialien aus organischen Lösungsmitteln und zum Färben in der Masse.

Die Farbstoffe der Formel I eignen sich auch zum Färben von organischen Lösungsmitteln, Mineralölprodukten, Wachsen, Kunststoffen und Oberflächenbelägen.

Die folgenden Ausführungsbeispiele veranschaulichen die Herstellung der erfindungsgemäßen Farbstoffe und Möglichkeiten zu ihrer Anwendung.

<u>Beispiel 1</u>

a) 33,1 g 4-Amino-3-nitrobenzolsulfonsäure-3-n-butoxypropylamid werden in 100 ml Eisessig durch Zutropfen von 33 g 40,5%iger Nitrosylschwefelsäure bei 15°C diazotiert. Die Diazolösung läßt man bei 0 bis 10°C in eine Lösung aus 15,8 g β-Naphthol, 120 ml 1n Natronlauge, 70 g wasserfreiem Natriumacetat und 1000 g Eis/Wasser einlaufen.

Nach beendeter Kupplung wird der entstandene Farbstoff abgesaugt, mit Wasser neutral und salzfrei gewaschen und unter vermindertem Druck getrocknet. Man erhält auf diese Weise 48,2 g des Farbstoffs der Formel

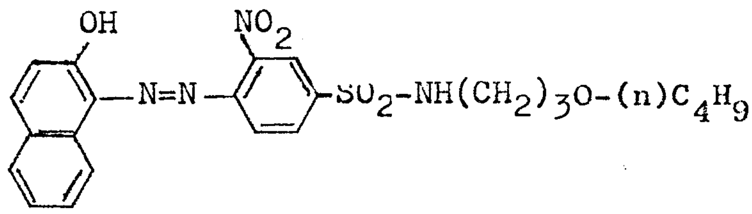

b) 0,5 g des feindispergierten Farbstoffs des Beispiels 1 werden in 2000 g Wasser eingerührt. Dann wird die Dispersion mit Essigsäure auf einen pH-Wert von 5 bis 6 eingestellt und mit 4,0 g Ammoniumsulfat sowie 2,0 g eines handelsüblichen Dispergiermittels auf Basis eines Naphthalinsulfonsäure-Formaldehyd-Kondensats versetzt. In die so erhaltene Färbeflotte bringt man 100 g eines Polyestergewebes auf Basis von Polyethylenglykoltherephthalat ein und färbt in einem Färbeautoklaven 1 Stunde bei 130°C. Nach anschließendem Spülen, reduktiver Nachbehandlung mit einer 0,2 %igen alkalischen Natriumdithionitlösung während 15 Minuten bei 70 bis 80°C, Spülen und Trocknen, erhält man eine farbstarke, brillante orange Färbung mit sehr guten coloristischen Eigenschaften.

c) Zur Herstellung der im Beispiel 1 eingesetzten Diazokomponente werden 52,6 g 4-Chlor-3-nitrobenzolsulfonsäure-(3-n-butoxy-)propylamid in 150 ml Toluolbranntwein während 10 Stunden bei 120°C im Autoklaven mit 20 g Ammoniak umgesetzt. Dann wird das Lösungsmittel und der überschüssige Ammoniak abgezogen, der Rückstand mit Wasser verrieben, abgesaugt, mit Wasser gewaschen und getrocknet.
Ausbeute: 46,4 g vom Schmelzpunkt 91 - 94°C
Analyse : gefunden (berechnet) C 47,9 (47,1), H 6,4 (6,3), N 12,2 (12,7), S 9,2 (9,7).

Das eingesetzte Chlorbenzolsulfonamid konnte aus 4-Chlor-3-nitrobenzolsulfonsäurechlorid durch Umsetzung mit der 2,1-fach molaren Menge 3-n-Butoxypropylamin in Aceton während 2 Stunden bei Raumtemperatur als Öl in quantitativer Ausbeute erhalten werden.

Beispiel 2

Eine 1:1-Mischung aus 30,8 g 4-Amino-3-nitrobenzolsulfonsäure-2-methyl- bzw. -4-methylphenyl-ester wird, wie im Beispiel 1 beschrieben, diazotiert und auf β-Naphthol gekuppelt. Man erhält 40,5 g eines Farbstoffs der Formel

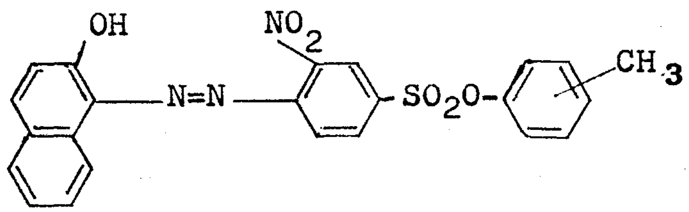

$2\text{-}CH_3 = 50\ \%$

$4\text{-}CH_3 = 50\ \%$

20,0 g des so erhaltenen Farbstoffs werden in feiner Verteilung einer Druckpaste, die 45,0 g Johannisbrotkernmehl, 6,0 g 3-nitrobenzolsulfonsaures Natrium und 3,0 g Zitronensäure auf 1000 g enthält, einverleibt. Mit dieser Druckpaste erhält man auf einem Polyestergewebe nach dem Bedrucken, Trocknen und Fixieren im Thermofixierrahmen während 40 Sekunden bei 195°C, Spülen und Fertigstellung, wie in Beispiel 1 beschrieben, einen farbstarken brillanten orangen Druck mit sehr guten coloristischen Eigenschaften.

Analog den Beispielen 1 und 2 lassen sich erfindungsgemäße Farbstoffe der Formel I herstellen, in denen der Rest X die in der folgenden Liste aufgeführten konkreten Bedeutungen hat.

$X = NR^1R^2$

| $R^1$ | $R^2$ |
|---|---|
| H | $(CH_2)_2CH(CH_3)_2$ |
| H | $n-C_6H_{13}$ |
| H | $i-C_6H_{13}$ |
| H | $n-C_7H_{15}$ |
| H | $CH_2CH=CH_2$ |
| H | $(CH_2)_2OC_2H_5$ |
| H | $(CH_2)_3-O-(i)C_3H_7$ |
| H | $(CH_2)_3-O-(i)C_4H_9$ |
| H | $(CH_2)_3-O-(CH_2)_2OCH_3$ |
| H | $(CH_2)_3-O-(CH_2)_2OC_2H_5$ |
| H | $(CH_2)_2-O-(CH_2)_2-O-(n)C_4H_5$ |
| H | $(CH_2)_2-O-CH_2CH=CH_2$ |
| H | $(CH_2)_3-O-C_6H_5$ |
| $(n)C_5H_{11}$ | $n-C_5H_{11}$ |
| $CH_2CH=CH_2$ | $CH_2CH=CH_2$ |
| $CH_3$ | $(CH_2)_2OH$ |
| $CH_3$ | $(CH_2)_2-O-COCH_3$ |
| $CH_3$ | $(CH_2)_2-O-C_2H_5$ |
| $CH_3$ | $(CH_2)_2-O-C_6H_5$ |
| $C_2H_5$ | $(CH_2)_2OH$ |
| $(i)C_3H_7$ | $(CH_2)_2OH$ |
| $(i)C_3H_7$ | $(CH_2)_2-O-COCH_3$ |
| $(n)C_4H_9$ | $(CH_2)_2OH$ |
| $(n)C_4H_9$ | $(CH_2)_2-O-(CH_2)_2OH$ |
| $CH_3$ | $(n)C_6H_{13}$ |
| $CH_3$ | $(i)C_7H_{15}$ |

X = $NR^1R^2$

| $R^1$ | $R^2$ |
|---|---|
| $C_2H_5$ | $(n)C_5H_{11}$ |
| $C_2H_5$ | $CH_2C_6H_5$ |
| $CH_3$ | $(CH_2)_2-O-(CH_2)_2OH$ |
| $CH_3$ | $CH_2CH(OH)CH_2Cl$ |
| $CH_3$ | $CH_2CH-O-(COCH_3)CH_2-O-COCH_3$ |
| $C_2H_5$ | $(CH_2)_2-O-(CH_2)_2-O-C_2H_5$ |

| X = $OR^3$ | X = $R^4$ |
|---|---|
| $R^3$ | $R^4$ |
| $2-CH_3-C_6H_4-$ | $(CH_2)_2OH$ |
| $4-CH_3-C_6H_4-$ | $(CH_2)_2-O-COCH_3$ |
| $4-Cl-C_6H_4-$ | $(CH_2)_2-O-COC_2H_5$ |
| $4-(i)C_3H_7C_6H_4-$ | $(CH_2)_2-O-C_2H_5$ |
| $4-(n)C_4H_9C_6H_4-$ | $(i)C_4H_9$ |
| $C_6H_5$ | $(n)C_6H_{13}$ |
| | $CH_2CH{=}CH_2$ |
| | $CH_2C_6H_5$ |
| | $(CH_2)_2-O-C_6H_5$ |
| | $(CH_2)_2CO-OCH_3$ |
| | $(CH_2)_2-O-(CH_2)_2-O-CH_3$ |

**P a t e n t a n s p r ü c h e**

1. Azofarbstoffe der Formel I

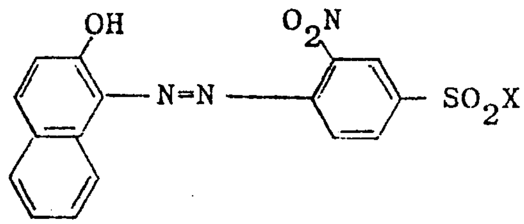

(I)

in der X für $NR^1R^2$, $OR^3$ oder $R^4$ steht, $R^1$ Wasserstoff, gegebenenfalls substituiertes Alkyl mit 1 bis 10 C-Atomen, Cycloalkyl mit 5 oder 6 C-Atomen, Alkenyl mit 3 bis 5 C-Atomen oder gegebenenfalls substituiertes Phenyl, oder ein Rest der Formel

$$-\left[AO\right]_m \cdot \left[A'O\right]_n \cdot R \quad \text{ist,}$$

$R^2$ substituiertes Alkyl mit 1 bis 4 C-Atomen, gegebenenfalls substituiertes Alkyl mit 5 bis 10 C-Atomen oder Alkenyl mit 3 bis 5 C-Atomen oder ein Rest der Formel

$$\left[AO\right]_m \cdot \left[A'O\right]_n \cdot R \quad \text{ist,}$$

wobei A und A' unabhängig voneinander lineare oder verzweigte zweiwertige, gesättigte Kohlenwasserstoffreste mit 2 bis 6 C-Atomen, R Wasserstoff, Alkyl mit 1 bis 4 C-Atomen, Cycloalkyl mit 5 oder 6 C-Atomen, Alkenyl mit 3 bis 5 C-Atomen, Phenyl, substituiertes Phenyl, Benzyl, Phenethyl, Alkylcarbonyl mit 1 bis 4 C-Atomen oder Benzoyl bedeuten und m die Werte 1 bis 5 und n die Werte 0 oder 1 annehmen kann, $R^3$ gegebenenfalls substituiertes Phenyl und $R^4$ substituiertes Alkyl mit 1 bis 4 C-Atomen gegebenenfalls substituiertes Alkyl mit 5 bis 10 C-Atomen, Cycloalkyl mit 5 oder 6 C-Atomen, Alkenyl mit 3 bis 5 C-Atomen oder gegebenenfalls substituiertes Phenyl bedeuten.

2. Verfahren zur Herstellung von Azofarbstoffen der Formel I

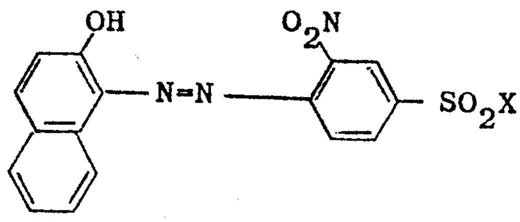

(I)

worin X die im Anspruch 1 angegebene Bedeutung hat, dadurch gekennzeichnet, daß man ein Amin der Formel II

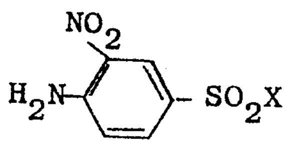

(II)

worin X die in Anspruch 1 angegebene Bedeutung hat, in an sich bekannter Weise diazotiert und die erhaltene Diazoniumverbindung auf β-Naphthol kuppelt.

3. Verwendung von Farbstoffen der Formel I des Anspruchs 1 und deren Mischungen untereinander und mit Farbstoffen anderer Farbstoffklassen zum Färben und Bedrucken von hydrophoben Fasermaterialien und hydrophobe Fasermaterialien enthaltenden Mischfasermaterialien.

Europäisches Patentamt

# EUROPÄISCHER RECHERCHENBERICHT

0096789

Nummer der Anmeldung

EP 83 10 5321

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | CA-A-1 096 557 (AMERICAN COLOR CHEM CORP.) * Seite 6, ganz; Seite 21, Beispiel IX * & Jp - A - 53 38780 (cat. D) | 1-3 | C 09 B 29/10 //<br>C 09 B 29/01<br>D 06 P 1/18 |
| Y | FR-A- 814 422 (I.G. FARBEN) * Seite 1, Zeilen 1-24; Seite 2; Beispiel 6 * | 1-3 | |
| Y | GB-A- 896 602 (HOECHST) * Seite 1, Zeilen 1-31; Seiten 1 und 2; Beispiel 1 * | 1-3 | |
| A | CH-A- 371 201 (HOECHST) * Seite 1, ganz; Seite 4, Tabelle, Beispiel 4 * | 1-3 | **RECHERCHIERTE SACHGEBIETE (Int. Cl. 3)** |
| A | FR-A- 853 177 (I.G. FARBEN) * Seite 1, ganz * | 1-3 | C 09 B 29/00 |
| P,Y | EP-A-0 054 904 (CASSELLA) * Seite 1, Formel I * | 1-3 | |

Der vorliegende Recherchenbericht wurde für alle Patentansprüche erstellt.

| Recherchenort | Abschlußdatum der Recherche | Prüfer |
|---|---|---|
| DEN HAAG | 14-09-1983 | GREEN C.H. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82